# EUROPEAN PATENT SPECIFICATION

(11) **EP 2 631 501 B1**
(45) Date of publication and mention of the grant of the patent: **09.09.2015**
(21) Application number: 12156635.0
(22) Date of filing: 23.02.2012
(51) Int. Cl.: F16C 23/04, F16C 27/02

(54) **Spherical plain bearing and a housing in combination with a spherical plain bearing**
Kugelförmiges Gleitlager und Gehäuse in Kombination mit einem kugelförmigen Gleitlager
Palier lisse sphérique et boîtier combiné avec un palier lisse sphérique

(43) Date of publication of application: 28.08.2013
(73) Proprietor: Roller Bearing Company of America, Inc., Oxford, CT 06478 (US)
(72) Inventor: Tschopp, Ruedi, 2802 Develier (CH); Charmillot, Philippe, 2832 Rebeuvelier (CH)
(74) Representative: Schwabe - Sandmair - Marx

(56) References cited:
- EP-A2- 1 837 538
- US-A- 3 666 331
- US-A- 5 052 824

## Description

### Field of the Invention

The present invention relates generally to spherical plain bearings and is more particularly directed to a spherical plain bearing employing shoulders for pressingly engaging a housing and to retain the bearing in position within the housing.

### Background of the Invention

Spherical plain bearings have spherical contact surfaces which permit the inner ring to rotate freely in all directions within the bearing and application design constraints. This allows these bearings to self align, which means for example, to adjust automatically to misalignment stemming from inaccurate machining, frame distortions from welding, or deformations due to the imposition of static and dynamic forces. Such misalignment would generate considerable end loading and cause early failure of plain cylindrical sleeve bearings.

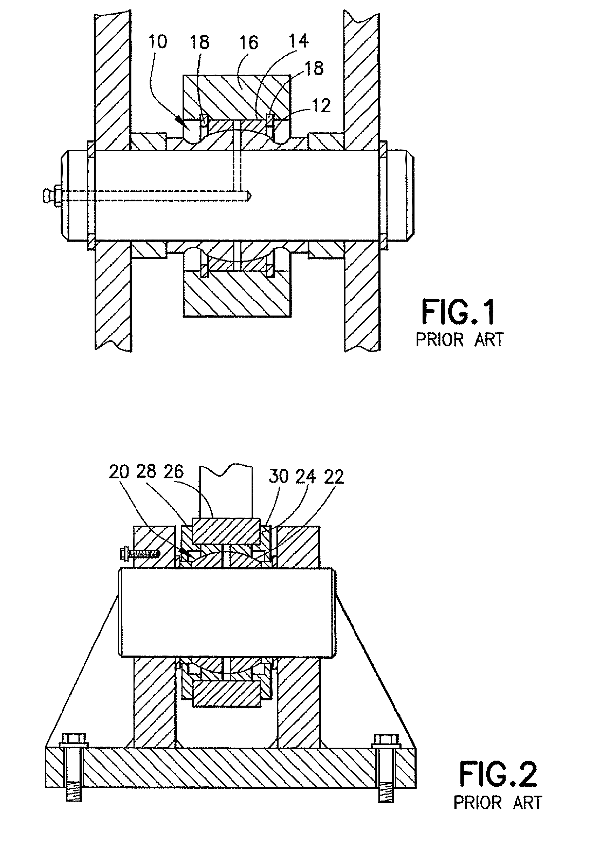

FIGS. 1 and 2 illustrate two prior art spherical plain bearing assemblies. FIG. 1 illustrates a tie rod assembly for a log skidder wherein a spherical plain bearing generally designated by the reference number 10 includes an inner ring 12 and an outer ring 14 positioned in a housing 16. A pair of retaining rings 18 is employed to retain the outer ring 14 in position in the housing 16. The outer ring 14 is in pressing engagement with the bore wall of the housing substantially along the entire length of the outer ring.

FIG. 2 illustrates a hinge pin assembly for a haul truck. This assembly is located between the bed and the frame of the haul truck and includes a spherical plain bearing 20 having an inner ring 22 and an outer ring 24. As with the assembly of FIG. 1, the outer ring 24 pressingly engages the inner ring 22 substantially along the entire length of the housing. In addition, the outer ring 24 and the housing 26 are retained in position by spacer members 28 and 30.

A difficulty encountered with prior art assemblies of this type is that when it is necessary to replace the spherical plain bearing, the housing and other components also must be replaced. Accordingly, there is a present need for a spherical plain bearing and spherical plain bearing/housing assembly whereby when the spherical plain bearing needs to be replaced, it is not requisite that any other components be replaced.

EP 1 837 538 A2 relates to a spherical plain bearing and a housing assembly according to the preamble of claim 1 with a spherical plain bearing. In a spherical plain bearing, an outer ring has a length and an outer periphery defining a first shoulder located at one end along the length and a second shoulder located at a second end along the length. The second end is generally opposite the first end with the first and second shoulders being sized to pressingly engage a housing wall. The housing wall defines a bore into which the spherical plain bearing is positioned. The outer periphery of the outer ring further defines a first staking lip extending radially outwardly from the outer periphery at a first distal end thereof and a second staking lip extending radially outwardly from the outer periphery at a second distal end thereof generally opposite the first distal end.

US 5,052,824 relates to a compliant spherical bearing. A self-aligning bearing including a first member having a convex bearing surface and a second member having a concave seat that receives the convex bearing surface of the first member, the second member also having a compliant relief region aligned with and spaced apart from the concave seat, the relief region serving to permit deflection of the second member in response to loading on the first member.

### Summary of the Invention

It is an object of the present invention to provide an improved and useful spherical plain bearing and housing assembly in which the mounting process of the bearing has minimum influence in the bearing torque.

In order to achieve the above-mentioned object, there is provided a spherical plain bearing and housing assembly according to claim 1.

Advantageous embodiments are defined by the dependent claims.

Advantageously, a spherical plain bearing includes an inner ring and an outer ring. The outer ring has a length and an outer periphery that defines a first shoulder located at one end of the outer ring and a second shoulder located at a second end of the outer ring generally opposite the first end. The first and second shoulders are sized to pressingly engage a housing wall that defines a bore into which the spherical plain bearing is positioned.

Advantageously, a spherical plain bearing includes an inner ring and an outer ring. The outer ring has an outer peripheral surface defining a first shoulder located at one end of the outer peripheral surface and a second shoulder located at a second end of the peripheral surface. The first and second shoulders are sized to pressingly engage a housing wall that defines a bore into which the spherical plain bearing is positioned. The outer ring has an inner peripheral surface. A first surface extends between the inner peripheral surface and the outer peripheral surface. Similarly, a second surface, generally opposite the first surface, extends between the inner and outer peripheral surfaces. The second surface is generally opposite the first surface. The first surface defines a first chamfer extending to the inner peripheral surface and the second surface likewise defines a second chamfer extending to the inner peripheral surface.

### Brief Description of the Drawings

FIG. 1 is a partial cross-sectional view of a prior art tie rod assembly used in a log skidder, employing a spherical plain bearing.
FIG. 2 is a partial cross-sectional view of a prior art hinge pin assembly for a haul truck, employing a spherical plain bearing.
FIG. 3 is a partial cross-sectional view of a spherical plain bearing and a housing in accordance with a second embodiment of the present invention.

### Detailed Description of the Preferred Embodiment

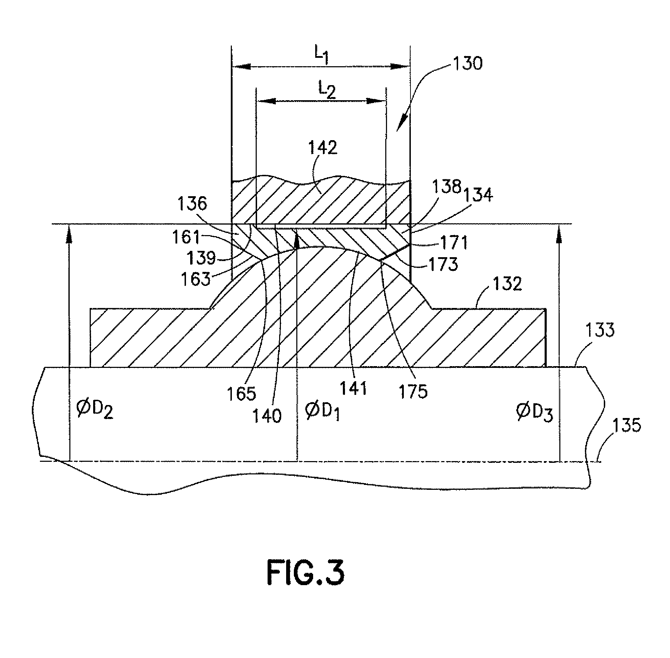

An embodiment of the present invention is shown in FIG. 3. A spherical plain bearing and housing assembly generally designated by the reference number 130 includes an inner ring 132 and an outer ring 134 that are substantially symmetrical about center line 135. A shaft member 133 is shown extending through the spherical plain bearing 130 for illustrative purposes only and can constitute any number of different components, such as, but not limited to a tie rod or hinge pin.

The outer ring 134 includes first and second shoulder, 136 and 138 respectively, that pressingly engage a bore wall 140 defined by a housing 142. The first and second shoulders, 136 and 138, respectively, are defined by the diameters D2 and D3, respectively. In the illustrated embodiment, the diameters D2 and D3 are substantially equal, however, the present invention is not limited in this regard as the diameters D2 and D3 can be different without departing from the broader aspects of the present invention. Extending between the first and second shoulders, 136 and 138 respectively, is a portion of the outer ring 134 defined by a diameter D1. Diameter D1 is smaller than diameters D2 and D3 thereby causing only the first and second shoulders, 136 and 138 respectively, to be in contact with the bore wall 140.

In the illustrated embodiment, the length of the outer ring 134 is defined by L1 and the length between the first shoulder 136 and the second shoulder 138 is defined by L2. As shown, the length of the first and second shoulders, 136 and 138 respectively, is approximately equal and thereby defined by the equation (L1-L2)/2. However, the present invention is not limited in this regard as the first and second shoulders, 136 and 138, respectively, can be of differing lengths without departing from the broader aspects of the present invention.

The outer ring 134 defines an outer peripheral surface 139 and an inner peripheral surface 141. The outer ring further defines a first surface 161 that extends between the inner peripheral surface 141 and the outer peripheral surface 139 and a second surface 171 that extends between the inner peripheral surface 141 and the outer peripheral surface 139. The second surface 171 is generally opposite the first surface 161. The first surface 161 defines a first chamfer 163. The first chamfer 163 extends to a first edge 165 of the inner peripheral surface 141. The second surface 171 defines a second chamfer 173. The second chamfer 173 extends to a second edge 175 of the inner peripheral surface 141. The length of the first chamfer 163 is greater than a length of the first shoulder 136 and the length of the second chamfer 173 is greater than a length of the second shoulder 138. However, the present invention is not limited in this regard as the first and second chamfers 163, 173 can be of differing lengths. When the spherical plain bearing 130 is installed in the housing 142, the shoulders 136, 138 are compressed by the housing 142, thereby causing the chamfers 163, 173 below the shoulders 136, 138 to flex. By flexing the chamfers 163, 173 unnecessary pressure on the inner ring 132 is minimized. As a result, a significant press-fit between the outer housing 142 and the outer ring 134 can be achieved without a significant increase on the torque on the inner ring 132.

## Claims

1. A spherical plain bearing and housing assembly, comprising:
a spherical plain bearing (130); and
a housing (142), wherein
the spherical plain bearing comprising:
an inner ring (132);
an outer ring (134), said outer ring (134) having an outer peripheral surface (139) defining a first shoulder (136) located at one end of said outer peripheral surface (139) and a second shoulder (138) located at a second end of said outer peripheral surface (139), said first and second shoulders being sized to pressingly engage a housing wall, said housing wall defining a bore (140) into which said spherical plain bearing (130) is positioned;
said outer ring (134) having an inner peripheral surface (141);
said outer ring (134) defines a first surface (161) extending between said inner peripheral surface (141) and said outer peripheral surface (139) and a second surface (171) extending between said inner peripheral surface (141) and said outer peripheral surface (139), said second surface (171) being generally opposite said first surface (161), wherein
said first surface (161) defines a first chamfer (163) extending to said inner peripheral surface (141) and said second surface (171) defines a second chamfer (173) extending to said inner peripheral surface (141), **characterized in that**
a length of said first chamfer (163) is greater than a length of said first shoulder (136) and **in that** a length of said second chamfer (173) is greater than a length of said second shoulder (138), wherein when said spherical plain bearing (130) is installed in said bore (140), said first and second shoulders (136, 138) are compressed by the housing (142), thereby causing the first chamfer (163) and the second chamfer (173) below said first and second shoulders (136, 138) to flex.

2. The spherical plain bearing and housing assembly as defined by claim 1
wherein said length of said first shoulder (136) is substantially equal to said length of said second shoulder (138).

3. The spherical plain bearing and housing assembly as defined by claim 2
wherein said length of said first chamfer (163) is substantially equal to said length of said second chamfer (173).

4. The spherical plain bearing and housing assembly as defined by claim 3
wherein a length of said outer ring (134) is defined by L1 and a distance between said first and second shoulders is defined by L2; and wherein
said first and second shoulder lengths, respectively, are each defined by (L1-L2)/2.

5. The spherical plain bearing and housing assembly as defined by claim 4
wherein said sum of said first shoulder length and said second shoulder length is less than or equal to L2.

6. The spherical plain bearing and housing assembly as defined by claim 5
wherein a first diameter defined by said first shoulder (136) is substantially equal to a second diameter defined by said second shoulder (138).

## Patentansprüche

1. Baugruppe eines sphärischen bzw. kugeligen Gleitlagers und eines Gehäuses, aufweisend:
ein sphärisches bzw. kugeliges Gleitlager (130); und
ein Gehäuse (142), wobei
das sphärische bzw. kugelige Gleitlager aufweist:
einen Innenring (132);
einen Außenring (134), wobei der Außenring (134) eine äußere periphere bzw. umfängliche Oberfläche (139) hat, die eine erste Schulter bzw. Absatz (136) definiert, die bzw. der an einem Ende von der äußeren peripheren bzw. umfänglichen Oberfläche (139) gelegen ist, und eine zweite Schulter bzw. Absatz (138) hat, die bzw. der an einem zweiten Ende von der äußeren peripheren bzw. umfänglichen Oberfläche (139) gelegen ist, wobei die ersten und zweiten Schultern bzw. Absätze in einer Größenordnung sind, um in einer drückenden bzw. pressenden Weise mit einer Gehäusewand in Eingriff zu sein, wobei die Gehäusewand eine Bohrung (140) definiert, in welcher das sphärische bzw. kugelige Gleitlager (130) positioniert ist;
wobei der Außenring (134) eine innere periphere bzw. umfängliche Oberfläche (141) hat;
wobei der Außenring (134) eine erste Oberfläche (161) definiert, die sich zwischen der inneren peripheren bzw. umfänglichen Oberfläche (141) und der äußeren peripheren bzw. umfänglichen Oberfläche (139) erstreckt, und eine zweite Oberfläche (171) definiert, die sich zwischen der inneren peripheren bzw. umfänglichen Oberfläche (141) und der äußeren peripheren bzw. umfänglichen Oberfläche (139) erstreckt, wobei die zweite Oberfläche (171) im Allgemeinen entgegengesetzt der ersten Oberfläche (161) ist, wobei
die erste Oberfläche (161) eine erste Abfasung bzw. Abschrägung (163) definiert, die sich zu der inneren peripheren bzw. umfänglichen Oberfläche (141) erstreckt, und wobei die zweite Oberfläche (171) eine zweite Abfasung bzw. Abschrägung (173) definiert, die sich zu der inneren peripheren bzw. umfänglichen Oberfläche (141) erstreckt, **dadurch gekennzeichnet, dass**
eine Länge von der ersten Abfasung bzw. Abschrägung (163) größer als eine Länge von der ersten Schulter bzw. Absatz (136) ist, und dass eine Länge von der zweiten Abfasung bzw. Abschrägung (173) größer als eine Länge von der zweiten Schulter bzw. Absatz (138) ist, wobei, wenn das sphärische bzw. kugelige Gleitlager (130) in der Bohrung (140) installiert ist, werden die ersten und zweiten Schultern bzw. Absätze (136, 138) durch das Gehäuse (142) zusammengedrückt, wodurch die erste Abfasung bzw. Abschrägung (163) und die zweite Abfasung bzw. Abschrägung (173) unterhalb der ersten und zweiten Schultern bzw. Absätze (136, 138) veranlasst werden, sich zu beugen bzw. nachzugeben.

2. Baugruppe eines sphärischen bzw. kugeligen Gleitlagers und eines Gehäuses, wie durch Anspruch 1 definiert, wobei die Länge von der ersten Schulter bzw. Absatz (136) im Wesentlichen gleich zu der Länge von der zweiten Schulter bzw. Absatz (138) ist.

3. Baugruppe eines sphärischen bzw. kugeligen Gleitlagers und eines Gehäuses, wie durch Anspruch 2 definiert, wobei die Länge von der ersten Abfasung bzw. Abschrägung (163) im Wesentlichen gleich zu der Länge von der zweiten Abfasung bzw. Abschrägung (173) ist.

4. Baugruppe eines sphärischen bzw. kugeligen Gleitlagers und eines Gehäuses, wie durch Anspruch 3 definiert, wobei eine Länge von dem Außenring (134) durch L1 definiert ist, und ein Abstand zwischen den ersten und zweiten Schultern bzw. Absätzen durch L2 definiert ist; und wobei
die ersten und zweiten Schulterlängen bzw. Absatzlängen jeweils durch (L1-L2) / 2 definiert sind.

5. Baugruppe eines sphärischen bzw. kugeligen Gleitlagers und eines Gehäuses, wie durch Anspruch 4 definiert, wobei die Summe von der ersten Schulterlänge bzw. Absatzlänge und der zweiten Schulterlänge bzw. Absatzlänge kleiner als oder gleich zu L2 ist.

6. Baugruppe eines sphärischen bzw. kugeligen Gleitlagers und eines Gehäuses, wie durch Anspruch 5 definiert, wobei ein erster Durchmesser, der durch die erste Schulter bzw. Absatz (136) definiert ist, im Wesentlichen gleich zu einem zweiten Durchmesser ist, der durch die zweite Schulter bzw. Absatz (138) definiert ist.

## Revendications

1. Ensemble de palier lisse sphérique et de boîtier comprenant :
un palier lisse sphérique (130) ; et
un boîtier (142), dans lequel :
le palier lisse sphérique comprenant :
une bague interne (132) ;
une bague externe (134), ladite bague externe (134) ayant une surface périphérique externe (139) définissant un premier épaulement (136) situé à une extrémité de ladite surface périphérique externe (139) et un second épaulement (138) situé à une seconde extrémité de ladite surface périphérique externe (139), lesdits premier et second épaulements étant dimensionnés pour mettre en prise, par pression, une paroi de boîtier, ladite paroi de boîtier définissant un alésage (140) dans lequel ledit palier lisse sphérique (130) est positionné;
ladite bague externe (134) ayant une surface périphérique interne (141) ;
ladite bague externe (134) définit une première surface (161) s'étendant entre ladite surface périphérique interne (141) et ladite surface périphérique externe (139) et une seconde surface (171) s'étendant entre ladite surface périphérique interne (141) et ladite surface périphérique externe (139), ladite seconde surface (171) étant généralement opposée à ladite première surface (161), dans lequel :
ladite première surface (161) définit un premier chanfrein (163) s'étendant vers ladite surface périphérique interne (141) et ladite seconde surface (171) définit un second chanfrein (173) s'étendant vers ladite surface périphérique interne (141), **caractérisé en ce que** :
une longueur dudit premier chanfrein (163) est supérieure à une longueur dudit premier épaulement (136) et **en ce qu'**une longueur dudit second chanfrein (173) est supérieure à une longueur dudit second épaulement (138), dans lequel lorsque ledit palier lisse sphérique (130) est installé dans ledit alésage (140), lesdits premier et second épaulements (136, 138) sont comprimés par le boîtier (142), amenant ainsi le premier chanfrein (136) et le second chanfrein (173) au-dessous desdits premier et second épaulements (136, 138) à fléchir.

2. Ensemble de palier lisse sphérique et de boîtier selon la revendication 1, dans lequel ladite longueur dudit premier épaulement (136) est sensiblement identique à ladite longueur dudit second épaulement (138).

3. Ensemble de palier lisse sphérique et de boîtier selon la revendication 2, dans lequel ladite longueur dudit premier chanfrein (163) est sensiblement identique à ladite longueur dudit second chanfrein (173).

4. Ensemble de palier lisse sphérique et de boîtier selon la revendication 3, dans lequel une longueur de ladite bague (134) est définie par L1 et une distance entre lesdits premier et second épaulements est définie par L2 ; et dans lequel :
lesdites première et seconde longueurs d'épaulement, respectivement, sont chacune définies par (L1 - L2) /2.

5. Ensemble de palier lisse sphérique et de boîtier selon la revendication 4, dans lequel ladite somme de la longueur dudit premier épaulement et de la longueur dudit second épaulement est inférieure ou égale à L2.

6. Ensemble de palier lisse sphérique et de boîtier selon la revendication 5, dans lequel un premier diamètre défini par ledit premier épaulement (136) est sensiblement égal à un second diamètre défini par ledit second épaulement (138).
